# EUROPEAN PATENT SPECIFICATION

(11) **EP 2 920 424 B1**
(45) Date of publication and mention of the grant of the patent: **08.07.2020**
(21) Application number: 13783532.8
(22) Date of filing: 25.10.2013
(51) Int. Cl.: F01D 5/14, B23H 1/00, F01D 9/02, B23H 9/10, B23P 15/04

(54) **METHODS OF MANUFACTURING BLADES OF TURBOMACHINES BY WIRE ELECTRIC DISCHARGE MACHINING, BLADES AND TURBOMACHINES**
VERFAHREN ZUR HERSTELLUNG VON SCHAUFELN VON TURBOMASCHINEN DURCH DRAHTERODIEREN, SCHAUFELN UND TURBOMASCHINEN
PROCÉDÉS DE FABRICATION D'AUBES DE TURBOMACHINES PAR USINAGE PAR ÉTINCELAGE, AUBES ET TURBOMACHINES

(30) Priority: 31.10.2012 IT CO20120054
(43) Date of publication of application: 23.09.2015
(73) Proprietor: Nuovo Pignone S.r.l., 50127 Florence (IT)
(72) Inventor: GRILLI, Marco, I-50127 Florence (IT); GIUSTI, Enrico, I-50127 Florence (IT); ARCIONI, Massimo, I-50127 Florence (IT); CECCONI, Massimiliano, I-50127 Florence (IT)
(74) Representative: BRP Renaud & Partner mbB Rechtsanwälte Patentanwälte Steuerberater
(86) International application number: PCT/EP2013/072383
(87) International publication number: WO 2014/067868

(56) References cited:
- WO-A1-2009/157817
- US-A- 3 044 745
- US-A1- 2005 238 492
- US-A1- 2006 120 869
- US-A1- 2010 202 889

## Description

### TECHNICAL FIELD

Embodiments of the subject matter disclosed herein generally relate to blades for turbomachines, turbomachines using such blades and methods of manufacturing such blades; more specifically, they relate to stator blades for steam turbines, steam turbines using such blades and methods of manufacturing such blades.

### BACKGROUND ART

US 2005/0238492 A1 discloses a steam turbine airfoil which is hollowed out to form an interior cavity. The cavity opens through the radial inner platform of the bucket and terminates short of the tip of the bucket.

In steam turbines, partial condensation of the steam occurs at their last stage or stages.

In particular condensation occurs on the airfoil portion of the stator blades of a so-called "condensing stage", typically the last stage of the turbine.

If droplets are generated as a consequence of condensation, they leave the static stator blades and they hit the rotating rotor blades; therefore, damages to the rotor blades may occur.

In order to reduce the damages caused by the droplets, the rotation speed of the rotor blades may be reduced; but in this way, the efficiency of the turbine is also reduced.

Alternatively, in order to reduce any damage on the rotor blades, solutions exist for collecting the condensation before the generation of droplets.

The most typical of these solutions consists in using hollow stator blades where condensation is likely to occur, providing holes and/or slots through the airfoil portion of the blades extending from the airfoil surface to the internal cavity, and sucking from the internal cavity so to that any condensation leaves the airfoil surface and enters the internal cavity. In this way, droplets on the airfoil surface of the stator blades are not generated and released - to be precise, droplets generation can not be completely avoided, but is simply highly reduced.

Manufacturing of a hollow stator blade for steam turbines has traditionally been done by starting from two metal sheets; thereafter, the two metal sheets were molded in such a way as to form two half-shells; then, the two half-shells were welded together; finally, some finishing was often done.

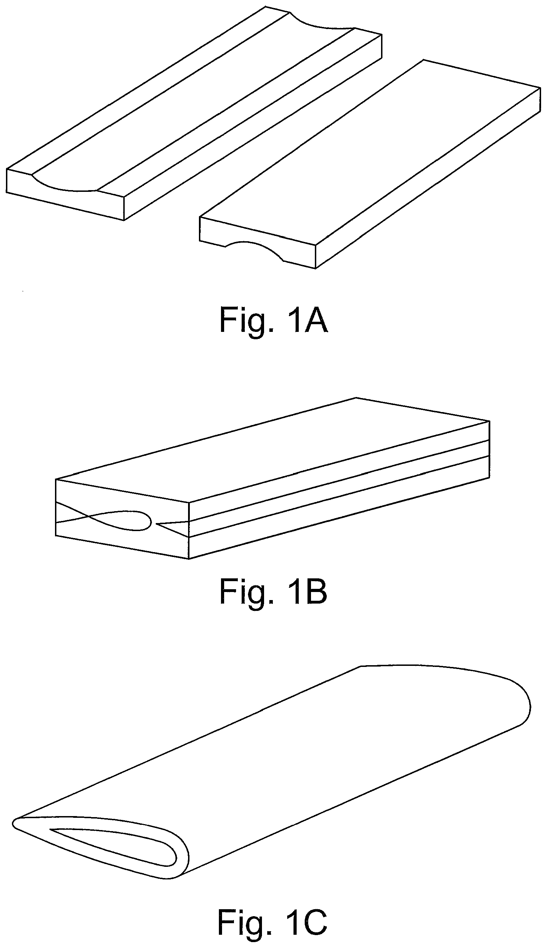

Sometimes, a different manufacturing method has more recently been used (see e.g. fugure 1):
- taking two metal bars,
- milling them separately so to define the surface of the internal cavity (see e.g. figure 1A),
- welding them together so to obtain a hollow piece (see e.g. figure 1B),
- mill finishing the hollow piece so to define the airfoil surface (see e.g. figure 1C).

This manufacturing method allows to define quite precisely the internal surface of the blade, i.e. the surface of the internal cavity, and quite precisely the external surface of the blade, i.e. the airfoil surface. Anyway, it is quite expensive as the milling operation (for the inside and the outside) is relatively slow.

In turbines, especially gas turbines, hollow blades are sometime used for rotor blades in order to reduce weight of the rotating element. These hollow blades are typically obtained through casting, particularly "investment casting", in order to obtain a rotating element having an extremely precise shape and size; anyway, this manufacturing method is very expensive especially when used for small-lot production (for example 100-1000 pieces). Document US 2006/0120869 discloses a method of manufacturing a blade of a turbomachine of the prior art according to the preamble of claim 1.

### SUMMARY

The present invention is defined in the accompanying claims.

Therefore, there is a general need for a solution of blades, in particular steam turbine hollow blades, allowing an easier and more economical manufacturing without sacrificing shape and/or size precision. In particular, there is a need for a manufacturing method that does not require molds and that does require limited or no milling and/or finishing and that is different from casting.

Additionally, it would be desirable to obtain a hollow blade in a single piece integrating not only the airfoil portion but also a root portion and a shroud portion.

Anyway, if the airfoil portion, the root portion and the shroud portion should be three separated pieces, it would be desirable to join them easily.

Finally, it would be desirable to manufacture modules comprising a set of steam turbine hollow blades in an easy way.

It is to be considered that one of the ultimate goals is to manufacture a whole steam turbine having good performances in a relatively easy way and at a reasonable cost.

The present inventors started from the realization that for a steam turbine hollow blade the shaped on the surface of the internal cavity is not particularly critical; this is quite different from the internal cavity of other kinds of hollow blades. On the other side, the shape of the airfoil surface is very important.

At the light of these observations, they thought of (A) realizing the blade in a single peace, (B) using milling for the airfoil surface so that its shape would be extremely precise, (C) using Wire Electric Discharge Machining, i.e. Wire EDM, for the internal cavity so that it would be sufficiently simple and easy to be realized and its shape would be sufficiently precise, i.e. the internal surface of the blade would much sufficiently well with the external surface of the blade.

By using Wire EDM, the surface of the internal cavity is a "ruled surface".

In this way, no welding is necessary for manufacturing the blade, the precision of the machine surface or surfaces of the blade is extremely high, and the thickness of the lateral wall of the airfoil portion of the blade may be very low.

This manufacturing method is particularly suitable and convenient for small-lot production (for example 100-1000 pieces).

The present inventors realized afterwards that the Wire EDM was suitable for forming not only the internal surface of a hollow turbine blade but also for forming both the internal and the external surfaces of a blades, even for long (for example up to 1000 mm) blades, provided these surfaces are designed as "ruled surfaces" or very close to such kind of surfaces.

A first aspect of the present invention is a blade for a turbomachine manufactured by the method of claims 1 or 2.

According to embodiments thereof, a blade for a turbomachine comprises an airfoil portion, wherein said airfoil portion extends longitudinally for a length and has a first end and a second end, wherein said airfoil portion is defined laterally by an airfoil surface, and wherein said airfoil surface is a ruled surface.

According to alternative embodiments thereof, a blade for a turbomachine comprises an airfoil portion, wherein said airfoil portion extends longitudinally for a length and has a first end and a second end, wherein said airfoil portion is defined laterally by an airfoil surface, wherein said airfoil portion has an internal cavity extending entirely along said length, and wherein said internal cavity is defined laterally by a ruled surface.

Said airfoil surface may be a ruled surface.

The blade may be arranged as a stator blade for a steam turbine comprising a root portion, a shroud portion and an airfoil portion, wherein said airfoil portion extends longitudinally for a length and has a first end and a second end, said first end being adjacent to said root portion and said second end being adjacent to said shroud portion, wherein said airfoil portion is defined laterally by an airfoil surface, wherein said airfoil portion has an internal cavity extending entirely along said length, and wherein said internal cavity is defined laterally by a ruled surface.

At any point of the airfoil portion the distance (measured transversally to the blade) between said airfoil surface and said ruled surface may be variable.

At any point of the airfoil portion, the distance (measured transversally to the blade) between said airfoil surface and said ruled surface may be greater than 1mm and smaller than 5mm.

At said first end there is a first offset between said airfoil surface and said ruled surface; said first offset may be constant and may be in the range from 1mm and 5mm.

At said second end there is a second offset between said airfoil surface and said ruled surface; said second offset may be constant and may be in the range from 1mm and 5mm.

Said root portion, said shroud portion and said airfoil portion may be in a single piece, and said ruled surface may extend also through said root portion and said shroud portion.

Said root portion and said shroud portion may be joined to said airfoil portion at said first and second ends. In this case, said root portion has a first (through) hole having a shape corresponding to the shape of said ruled surface at said first end, and said shroud portion has a second (through) hole having a shape corresponding to the shape of said ruled surface at said second end.

Said root portion may comprise a first sleeve having an external surface mating with said ruled surface of said airfoil portion at said first end. In this case, said first sleeve may have a first through hole defined laterally by a ruled surface.

Said shroud portion may have a second sleeve having an external surface mating with said ruled surface of said airfoil portion at said second end. In this case, said second sleeve may have a second through hole defined laterally by a ruled surface.

The blade may comprise one single root portion, one single shroud portion and a plurality of airfoil portions, wherein each of said airfoil portions extends longitudinally for a length and has a first end and a second end, each of said first ends being adjacent to said root portion and each of said second ends being adjacent to said shroud portion, wherein each of said airfoil portions is defined laterally by an airfoil surface, wherein each of said airfoil portion has an internal cavity extending entirely along said length, and wherein said internal cavity is defined laterally by a ruled surface.

Said root portion may be or comprise a plate, said plate being substantially flat or curved and having a hole.

Said shroud portion may be or comprise a plate, said plate being substantially flat or curved and having a hole.

Said airfoil portion typically has holes or slots extending from said airfoil surface to said internal cavity.

A second aspect of the present invention is a turbomachine.

According to embodiments thereof, a turbomachine comprises a plurality of blades as set out above.

The turbomachine may be arranged as a steam turbine and comprising a plurality of stator blades as set out above (in particular with an internal cavity defined laterally by a ruled surface and integrating a root portion, a shroud portion and an airfoil portion).

The turbomachine may comprise a plurality of stages, wherein stator blades as set out above (in particular with an internal cavity defined laterally by a ruled surface and integrating a root portion, a shroud portion and an airfoil portion) are used only for the last stages.

The turbomachine may comprise a plurality of stages starting with a first stage and ending with a last stage, wherein (typically only) said last stage comprises a plurality of stator blades as set out above (in particular with an internal cavity defined laterally by a ruled surface and integrating a root portion, a shroud portion and an airfoil portion).

The turbomachine may comprise an inner ring and a plurality of stator blades as set out above, wherein each of root portions of said stator blades are fixed (i.e. welded or inserted and welded or push fitted and welded) to said inner ring.

The turbomachine may comprise an outer ring and a plurality of stator blades as set out above, wherein each of shroud portions of said stator blades are fixed (i.e. welded or inserted and welded and push fitted and welded) to said outer ring.

The turbomachine may be an axial-flow turbine.

A third aspect of the present invention is a method of manufacturing a blade of a turbomachine according to claim 1.

The manufacturing method may comprise the steps of:
A) providing a bar made of metal,
B) milling said bar externally, and
C) wire electric discharge machining said bar internally so that a through hole is obtained defined by a ruled surface.

Said through hole may have a length greater than 50 mm and smaller than 1000 mm.

The manufacturing method may comprise the further step of forging said bar prior to milling it.

Through step B external surfaces of said root portion, said shroud portion and said airfoil portion may be obtained.

Through step B only an external surface of said airfoil portion may be obtained.

At said first end there is a first offset between said airfoil surface and said ruled surface, and wherein step C may be carried out so that said first offset being constant.

At said second end there is a second offset between said airfoil surface and said ruled surface, and wherein step C may be carried out so that said second offset being constant.

Said root portion may be (laser) welded to said airfoil portion at said first end.

Said shroud portion may be (laser) welded to said airfoil portion at said second end.

A plurality of airfoil portions may be (laser) welded to the same root portion.

A plurality of airfoil portions may be (laser) welded to the same shroud portion.

Said root portion and said airfoil portion may be brazed together at said first end.

Said shroud portion and said airfoil portion may be brazed together at said second end.

Said root portion may have a first through hole, and said first through hole may be obtained by wire electric discharge machining.

Said shroud portion may have a second through hole, and said second through hole may be obtained by wire electric discharge machining.

Said root portion may be (laser) welded to an inner ring of a steam turbine.

Said shroud portion may be (laser) welded to an outer ring of a steam turbine.

Through step B at least an external surface of said airfoil portion may be obtained; in this case, the further step of making (transversal) holes or slots extending from said external surface to said (longitudinal) through hole is carried out after step C. Said holes or slots are advantageously obtained by electric discharge machining.

Through step B at least an external surface of said airfoil portion may be obtained; in this case, the further step of making (transversal) holes or slots extending from said external surface to said (longitudinal) through hole is carried out before step C. Said holes or slots are advantageously obtained by laser drilling or cutting.

### BRIEF DESCRIPTION OF DRAWINGS

The accompanying drawings, which are incorporated herein and constitute a part of the specification, illustrate embodiments of the present invention and, together with the description, explain these embodiments. In the drawings:
Fig. 1 shows very schematically a manufacturing method of a steam turbine hollow blade that can be implemented according to the prior art or according to the present invention,
Fig. 2 shows very schematically a first manufacturing method of a steam turbine hollow blade according to the present invention,
Fig. 3 shows very schematically a second manufacturing method of a steam turbine hollow blade according to the present invention,
Fig. 4 shows very schematically a first possibility of assembling a steam turbine hollow blade according to the present invention following the method shown in Fig. 2,
Fig. 5 shows very schematically a second possibility of assembling a steam turbine hollow blade according to the present invention following the method shown in Fig. 2,
Fig. 6 shows very schematically a first possibility of assembling a steam turbine hollow blade module according to the present invention,
Fig. 7 shows very schematically and partially a first steam turbine stage according to the present invention,
Fig. 8 shows very schematically a second possibility of assembling a steam turbine hollow blade module according to the present invention,
Fig. 9 shows very schematically and partially a second steam turbine stage according to the present invention,

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims.

It is to be noted that in the accompanying drawings sometimes sizes have been exaggerated for the sake of clarity; in other words they are not perfectly in scale between each other.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

The blades of a turbomachine (a compressor, an expander, a turbine, ...) consist of or comprise an airfoil portion. The airfoil portion extends longitudinally for a certain length between a first end and a second end; in general, its cross-section varies along its length. The airfoil portion has basically one surface to be formed that is the "external lateral surface" or "airfoil surface" of the blade that is very important for the operation of the airfoil portion. For certain applications, the airfoil portion is hollow, i.e. it has an internal cavity that, depending on the specific application and the specific design, extends entirely or partially along its length; for example, in the blade of figure 1, the internal cavity extends along the entire length of the blade. The internal cavity is defined laterally by a surface that may be called the "internal lateral surface" or, simply, the "internal surface" of the blade; in general, the cross-section of the internal cavity varies along its length; anyway, depending on the specific application and the specific design, the variation in the cross-section of the internal cavity may be different from the variation in the cross-section of the airfoil portion; in other words the thickness of the lateral wall of the airfoil portion may vary along its length and even from point to point.

According to the present invention, at least one external or internal surface of the airfoil portion is obtained by wire electric discharge machining, i.e. "Wire EDM". This particularly applies to the blades of turbomachines for "Oil & Gas" applications; for the last stage of a steam turbine, stator blades have a length in the range from 50 mm up to 1000 mm.

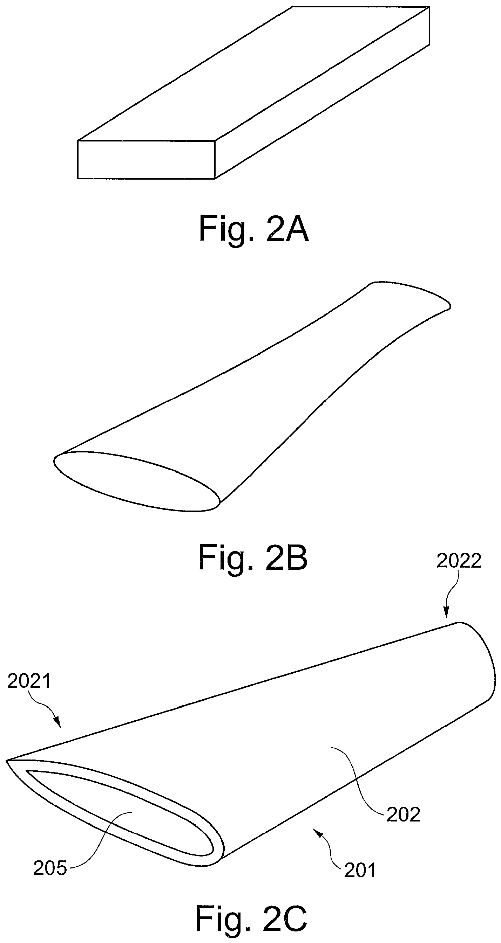

A first possibility is to form by Wire EDM only the external surface, i.e. the airfoil surface; for example, Wire EDM may be used, in figure 1, for machining the piece of figure 1B and obtaining the piece of figure 1C, and, in figure 2, for machining the piece of figure 2A and obtaining the piece of figure 2B.

A second possibility is to form by Wire EDM only the internal surface, i.e. the surface of the internal cavity; for example, Wire EDM may be used, in figure 1, for machining two separate bars and obtaining the two pieces of figure 1A, and, in figure 2, for machining the piece of figure 2B and obtaining the piece of figure 2C.

A third possibility is to form by Wire EDM both the external surface and the internal surface of the airfoil portion.

By Wire EDM only a "ruled surface" may be obtained; it is to be noticed that, by this term, it is meant not only a "simple" ruled surface, but also a "complex" ruled surface deriving from a combination of two or more ruled surfaces, for example a large conical surface at the bottom and a small cylindrical surface at the top.

Although many differences surfaces may be obtained by Wire EDM, if this technology is to be used, the design of the blade should take it into account; for example, the aim should be to find ideal shapes of the surfaces of the blade that are exactly ruled surfaces or are sufficiently close to ruled surfaces. When this is not possible, milling can be used instead of Wire EDM; it is to be noticed that, depending on the specific application, the need for milling, instead of Wire EDM, may apply to any of the blade surface. For sure, Wire EDM may very advantageously be used when shape and size precisions are not extremely high such as for the surface of the internal cavity of a stator blade of a steam turbine.

With reference to figure 2, a manufacturing method of a blade 201, consisting only in an airfoil portion 202, comprises the steps of:
A) providing a bar made of metal (figure 2A),
B) milling the bar externally (figure 2B), and
C) wire electric discharge machining the bar internally so that a through hole 205 is obtained defined by a ruled surface (figure 2C).

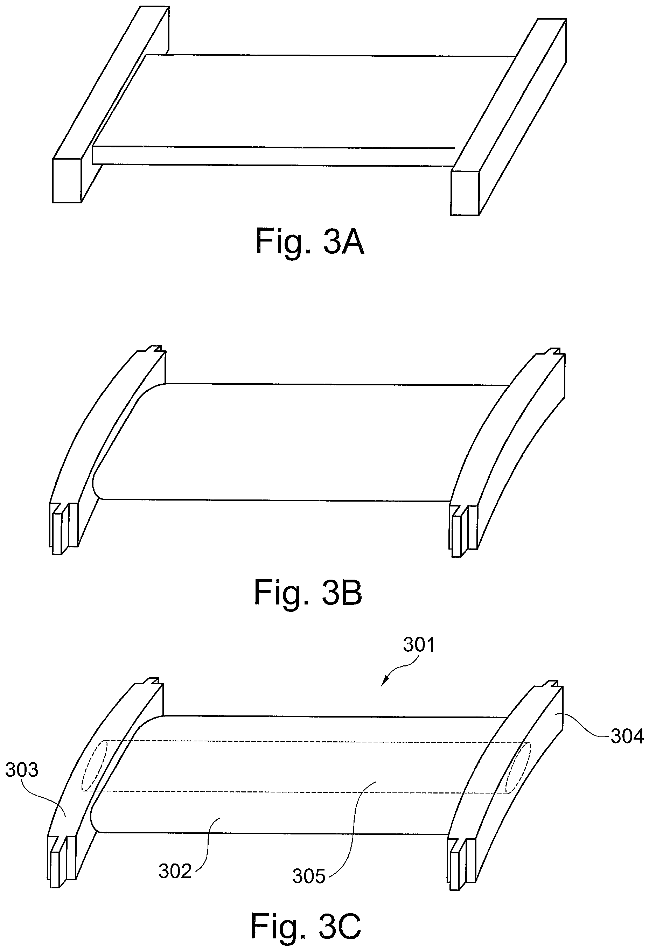

With reference to figure 3, a manufacturing method of a blade 301 comprises the steps of: providing a bar made of metal, forging the bar (figure 3A), milling the bar externally (figure 3B), and wire electric discharge machining the bar internally so that a through hole 305 is obtained defined by a ruled surface (figure 3C).

According to the embodiment of figure 3, by first forging and then milling, not only the external surface of the airfoil portion 302 is obtained, but also the external surfaces of a root portion 303 and a shroud portion 304 both adjacent to the airfoil portion 302; the through hole 305 extends not only along the entire length of the airfoil portion 302, but also inside the root portion 303 and the shroud portion 304; in this case the root portion and the shroud portion are integral with the airfoil portion.

According to those embodiments of the present invention wherein the airfoil portion is not integral with case the root portion and the shroud portion, one step of the manufacturing method is used for forming only the external surface of the airfoil portion (see e.g. figure 2B).

In this case, at a first end (2021 in figure 2C) of the airfoil portion there is a first offset between the airfoil surface and the ruled surface, and Wire EDM may be carried out so that this first offset be constant.

In this case, at a second end (2022 in figure 2C) of the airfoil portion there is a second offset between the airfoil surface and the ruled surface, and Wire EDM may be carried out so that this second offset be constant.

Typically these two features are implemented together.

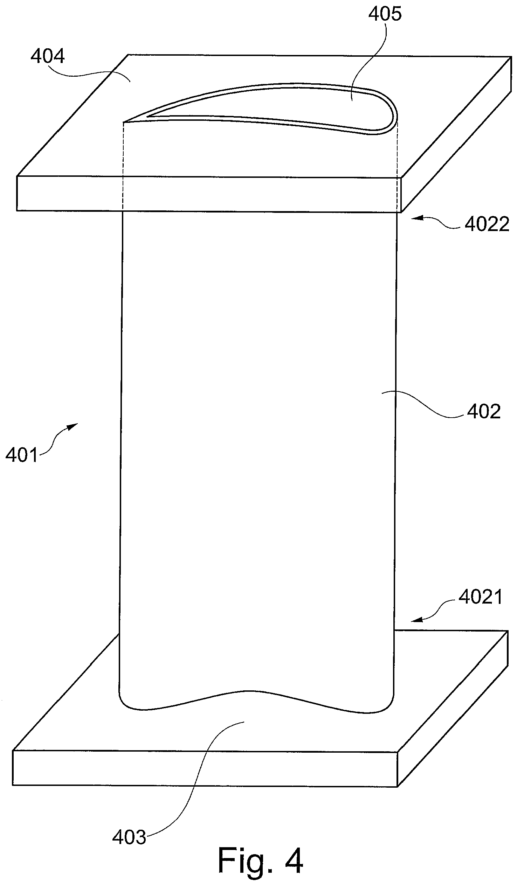

The embodiment of figure 4, is a blade 401 comprising an airfoil portion 402, a root portion 403 and a shroud portion 404; the airfoil portion 402 may be manufactured similarly to the airfoil portion 202 in figure 2.

The root portion 403 is welded, advantageously laser welded, to the airfoil portion 402 at a first end 4021 thereof.

The shroud portion 404 is welded, advantageously laser welded, to the airfoil portion 402 at a second end 4022 thereof.

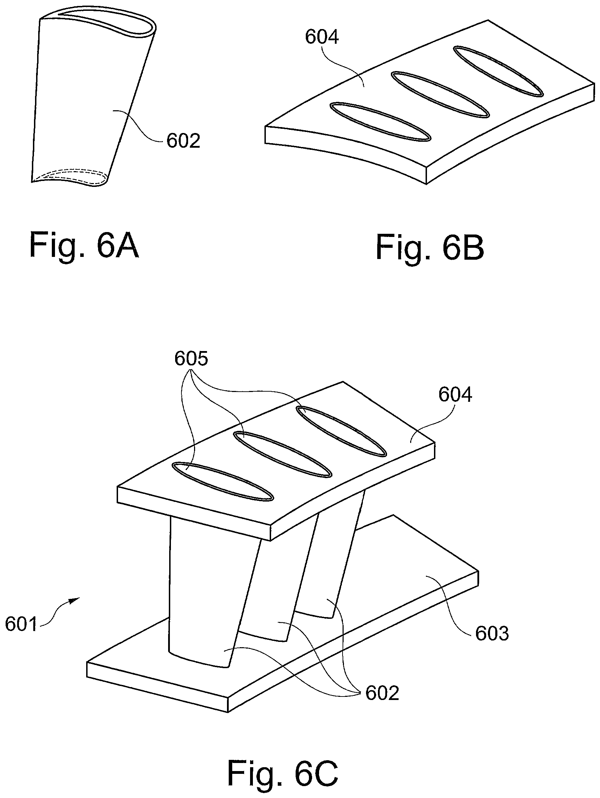

A similar manufacturing approach is used for the blade 601 in figure 6. In this case, the blade comprises a plurality of airfoil portions 602 (see figure 6A), in particular three (suitable numbers are in the range between two and five); the airfoil portions 602 are welded, advantageously laser welded, to a same single shroud portion 604 (see figure 6B); the same is true for a single root portion 603; in this way, multi-blade, or "blade module", 601 is obtained (see figure 6C). It is to be noticed that the root portion 603 and the shroud portion 604 are in the form of curved plates.

In alternative way to join the airfoil portion together with root portion and/or the shroud portion is by means of brazing.

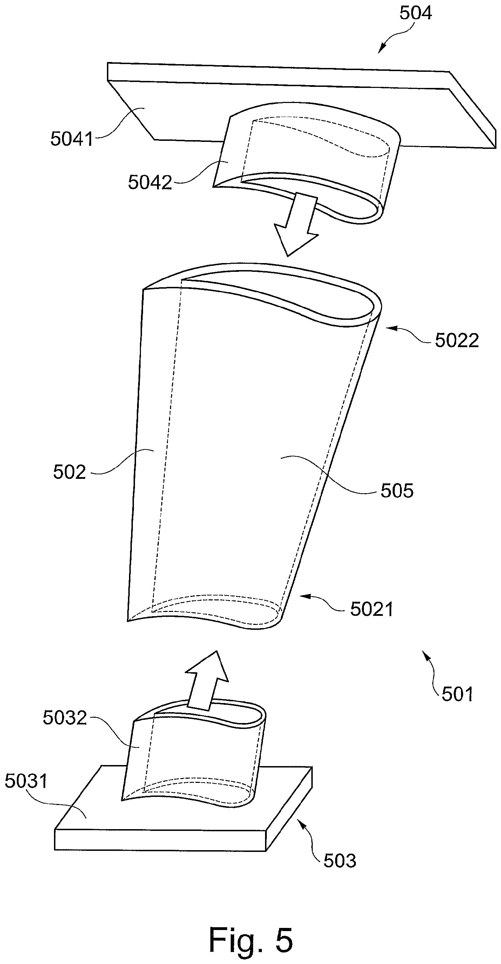

According to the embodiment of figure 5, a blade 501 is obtained by providing an airfoil portion 502, that may be similar to the airfoil portion 202 of figure 2, and brazing it, at a first end 5021, to a root portion 503 and, at a second end 5022, to a shroud portion 504.

According to the particular embodiment of figure 5, the root portion 503 comprises a (substantially flat) plate 5031 and a sleeve 5032; the sleeve 5032 is inserted into the internal cavity 505 of the airfoil portion 502. The sleeve 5032 has preferably an external surface mating with the ruled surface of the internal cavity 505 of the airfoil portion 502 at the first end 5021; in this way, a good brazing may be achieved. A very good mating may be achieved if Wire EDM is used for forming the internal surface of the internal cavity 505 and milling is used for forming the external surface of the sleeve 5032; in fact, Wire EDM machines and milling machines are "computer aided" and therefore it is possible to set the same shape (or two very similar shapes) for distinct surfaces of two pieces. Also sleeve 5032 is typically hollow, as shown in figure 5, and obtained by Wire EDM.

According to the embodiment of figure 5, a blade 501 is obtained by providing an airfoil portion 502, that may be similar to the airfoil portion 202 of figure 2, and brazing it, at a first end 5021, to a root portion 503 and, at a second end 5022, to a shroud portion 504.

According to the particular embodiment of figure 5, the shroud portion 504 comprises a (substantially flat) plate 5041 and a sleeve 5042; the sleeve 5042 is inserted into the internal cavity 505 of the airfoil portion 502. The sleeve 5042 has preferably an external surface mating with the ruled surface of the internal cavity 505 of the airfoil portion 502 at the first end 5021; in this way, a good brazing may be achieved. A very good mating may be achieved if Wire EDM is used for forming the internal surface of the internal cavity 505 and milling is used for forming the external surface of the sleeve 5042; in fact, Wire EDM machines and milling machines are "computer aided" and therefore it is possible to set the same shape (or two very similar shapes) for distinct surfaces of two pieces. Also sleeve 5042 is typically hollow, as shown in figure 5, and obtained by Wire EDM.

Brazing may be used instead of welding also for multi-blades, or "blade modules", as the one in figure 6.

As an alternative to brazing for example in the embodiment of figure 5, an appropriate glue may be used; the glue must be selected taking into account the operating conditions (for example, temperature, pressure, flowing materials, ...) of the blade.

One or each of the root portion and the shroud portion may have a through hole; this is the case of the embodiments of e.g. figures 4, 5, 6.

In this cases, for example, these through holes may be obtained by Wire EDM; in this way a perfect match may be achieved between the shape of the internal cavity of the airfoil portion at an end and the shape of the hole of the root or shroud portion, and a perfect welding may be carried out; in fact, Wire EDM machines are "computer aided" and therefore it is possible to set the same shape (or two very similar shapes) for distinct elements.

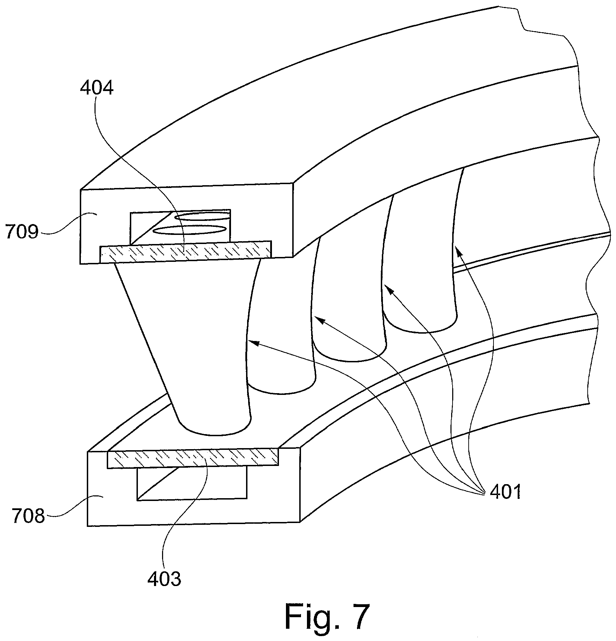

Figure 7 shows an application of the blade 401 of figure 4; alternatively, the blade 501 of figure 5 or the multi-blade, or "blade module", 601 of figure 6 may be used instead of the blade 401 of figure 4. According to this embodiment, each of the root portions 403 of the blades 401 are welded, advantageously laser welded, to an inner ring 708 of a turbine, and each of the shroud portions 404 of the blades 401 are welded, advantageously laser welded, to an outer ring 709 of a turbine; coupling between the root or shroud portion and the corresponding ring may be provided through a push fit or simply by a seat positioning.

Specifically, figure 7 shows partially the array of the stator blades of the last stage of a (axial flow) steam turbine. This arrangement is very advantageously from the construction point of view.

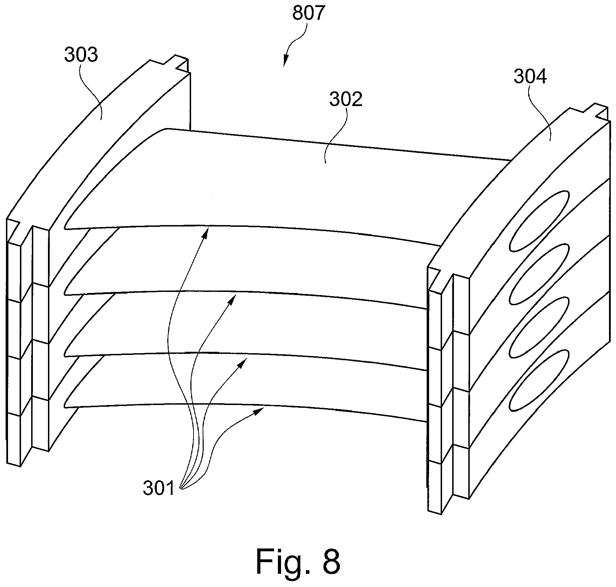

Figure 8 shows a multi-blade, or "blade module", 807 corresponding to the a plurality of blades 301 of figure 3 adjacent to each other; the blades 301 may be welded together or not.

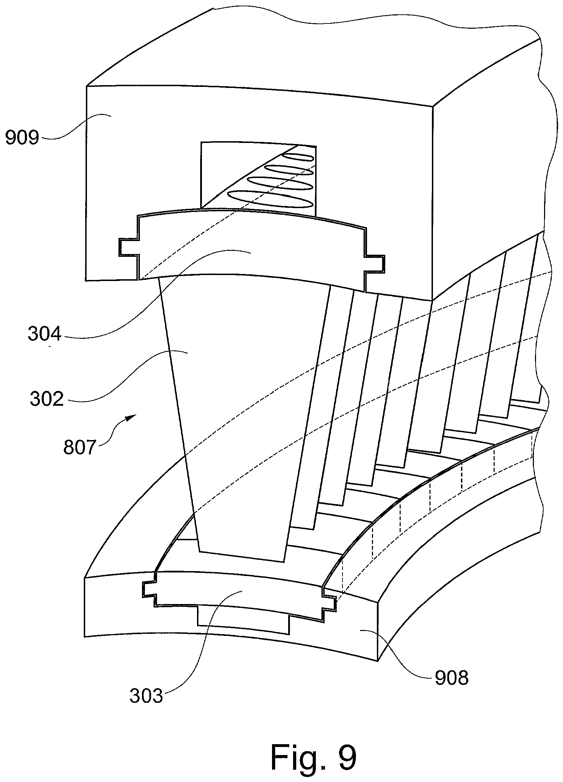

Figure 9 shows an application of the multi-blade, or "blade module", 807 of figure 8. According to this embodiment, each of the root portions 303 of the blades 301 are welded, advantageously laser welded, to an inner ring 908 of a turbine, and each of the shroud portions 304 of the blades 301 are welded, advantageously laser welded, to an outer ring 909 of a turbine; coupling between the root or shroud portion and the corresponding ring may be provided e.g. through a complementary shaping and a guided insertion (see figure 9).

Specifically, figure 9 shows partially the array of the stator blades of the last stage of a (axial flow) steam turbine. This arrangement is very advantageously from the construction point of view.

In case that the present invention is used for stator blades of a steam turbine, holes and/or slots are typically provided for sucking condensation.

According to a first possibility, holes or slots transversal to the blade and extending from the external surface of the airfoil portion to the internal surface of the airfoil portion are made after forming the internal cavity of the blade. In this case, the holes or slots are obtained by electric discharge machining.

According to a second possibility, holes or slots transversal to the blade and extending from the external surface of the airfoil portion to the internal surface of the airfoil portion are made preferably forming the internal cavity of the blade. In this case, the holes or slots are obtained by laser drilling or cutting.

The inner rings 708 and 908 and the outer rings 709 and 909 of figures 7 and 9 have internal cavities extending all around the rings and in communication with internal cavities of the blades; such solution may be used for collecting condensation or for other purposes (for example circulating a fluid).

By using the manufacturing methods according to the present invention, novel and inventive turbomachine blades are obtained.

Essentially, at least one external or internal surface of the airfoil portion of the blade is a "ruled surface"; it is to be noticed that, by this term, it is meant not only a "simple" ruled surface, but also a "complex" ruled surface deriving from a combination of two or more ruled surfaces.

In typical applications of the present invention, the internal cavity extending entirely along the entire length of the airfoil portion is defined laterally by a ruled surface (see e.g. figure 2).

The blade may be designed so that, at any point of the airfoil portion, the distance (measured transversally to the blade) between the external surface and the external surface is variable; in particular, this distance is preferably greater than 1 mm and smaller than 5 mm.

At a first end of the airfoil portion there is a first offset between the external surface and the internal surface; this first offset is advantageously constant and preferably in the range between 1 mm and 5 mm.

At a second end of the airfoil portion there is a second offset between the external surface and the internal surface; this second offset is advantageously constant and preferably in the range between 1 mm and 5 mm.

According to advantageous embodiments, the root portion, the shroud portion and the airfoil portion of the blade are in a single piece; in this case, the ruled surface of the internal cavity extends also through the root portion and the shroud portion (see e.g. figure 3).

Alternatively, the root portion and the shroud portion are joined to the airfoil portion at their ends (see figures 4 and 5).

In this case, the root portion may have a first (through) hole having a shape corresponding to the shape of the ruled surface of the internal cavity at said first end, and the shroud portion may have second (through) hole having a shape corresponding to the shape of the ruled surface of the internal cavity at said second end (see figure 4).

Still in this case, but according to a different manufacturing method, the root portion comprises a first sleeve having an external surface mating with the ruled surface of the internal cavity of the airfoil portion at the first end, and the shroud portion has a second sleeve having an external surface mating with the ruled surface of the internal cavity of the airfoil portion at the second end. In this case, the first sleeve has typically a first through hole defined laterally by a ruled surface and the second sleeve has typically a second through hole defined laterally by a ruled surface.

The construction details just described may be implemented not only in "single-blades" (for example 201 in figure 2, 301 in figure 3, 401 in figure 4 and 501 in figure), but also in "multi-blades", or "blade modules", (for example 601 in figure 6 and 807 and figure 8).

The just described blades, whether "single-blades" or "multi-blades" may be effectively and efficiently used in the stages of turbomachines (see for example figure 7 and figure 9), in particular in a stator blade array of the last stages, in particular the very last stage, of a steam turbine.

## Claims

1. A method of manufacturing a blade (201) of a turbomachine comprising an airfoil portion (202), wherein said airfoil portion (202) extends longitudinally for a length and has a first end (2021) and a second end (2022), wherein said airfoil portion (202) is defined laterally by an airfoil surface, wherein said airfoil portion (202) has an internal cavity (205) extending entirely along said length, wherein said internal cavity (205) is defined laterally by an internal surface, and wherein said internal surface is obtained by wire electric discharge machining and said internal cavity (205) is defined laterally by a ruled surface;
wherein a sleeve (5032, 5042) of at least one of a root portion (503) and a shroud portion (504) is inserted into the internal cavity (205) of the airfoil portion (202) with an external surface of the or each sleeve (5032, 5042) having an external surface mating with the ruled surface of the internal cavity (205) of the airfoil portion (202), **characterised in that**
the method further comprises joining the airfoil portion together with the at least one of the root portion and the shroud portion by welding or glueing or brazing.

2. The manufacturing method of the preceding claim, wherein said airfoil portion (202) is adjacent on a first side to a root portion (503) and on a second side to a shroud portion (504), and wire electric discharge machining is used for creating a through hole in both said root portion (503) and said shroud portion (504) respectively at the ends of said internal cavity (205).

3. A blade for a turbomachine manufactured by the method of any one of the preceding claims.

4. The blade (201) of claim 3, comprising an airfoil portion (202), wherein said airfoil portion extends longitudinally for a length and has a first end (2021) and a second end (2022), wherein said airfoil portion is defined laterally by an airfoil surface, wherein said airfoil portion has an internal cavity (205) extending entirely along said length, and wherein said internal cavity is defined laterally by a ruled surface.

5. The blade (401) of claim 4, being arranged as a stator blade for a steam turbine and comprising a root portion (403), a shroud portion (404) and an airfoil portion (402), wherein said airfoil portion extends longitudinally for a length and has a first end (4021) and a second end (4022), said first end being adjacent to said root portion (403) and said second end (404) being adjacent to said shroud portion, wherein said airfoil portion is defined laterally by an airfoil surface, wherein said airfoil portion has an internal cavity (405) extending entirely along said length, and wherein said internal cavity is defined laterally by a ruled surface.

6. The blade (201,401) of claim 4 or claim 5, wherein at any point of the airfoil portion (202,402) the distance between said airfoil surface and said ruled surface is variable along the length of the airfoil portion (202).

7. The blade (201,401) of any of claims 3 to 6, wherein at said first end (2021,4021) there is a first offset between said airfoil surface and said ruled surface and at said second end (2022,4022) there is a second offset between said airfoil surface and said ruled surface, said first offset and/or said second offset being constant.

8. The blade (401) of claim 5 or any claim dependent thereon, wherein said root portion (403), said shroud portion (404) and said airfoil portion (402) are in a single piece, and wherein said ruled surface extends also through said root portion and said shroud portion.

9. The blade (401) of claim 5 or any claim dependent thereon, wherein said root portion (403) and said shroud portion (404) are joined to said airfoil portion (402) at said first and second ends (4021,4022), wherein said root portion has a first hole having a shape corresponding to the shape of said ruled surface at said first end, wherein said shroud portion has a second hole having a shape corresponding to the shape of said ruled surface at said second end.

10. The blade (401) of claim 5 or any claim dependent thereon, wherein said root portion (503) comprises a first sleeve (5032) having an external surface mating with said ruled surface of said airfoil portion (502) at said first end and/or wherein said shroud portion (504) has a second sleeve (5042) having an external surface mating with said ruled surface of said airfoil portion (502) at said second end.

11. The blade of claim 10, wherein one or each of said first sleeve (5032) and said second sleeve (5042) has a second through hole defined laterally by a ruled surface.

12. The blade of any of claims 3 to 11, comprising one single root portion (603), one single shroud portion (604) and a plurality of airfoil portions (602), wherein each of said airfoil portions (602) extends longitudinally for a length and has a first end and a second end, each of said first ends being adjacent to said root portion (603) and each of said second ends being adjacent to said shroud portion (604), wherein each of said airfoil portions (602) is defined laterally by an airfoil surface, wherein each of said airfoil portions (603) has the internal cavity extending entirely along said length, and wherein said internal cavity is defined laterally by the ruled surface.

13. A turbomachine comprising a plurality of blades according to any of claims 3 to 12.

## Patentansprüche

1. Verfahren zur Herstellung einer Schaufel (201) einer Turbomaschine, umfassend einen Schaufelblattabschnitt (202), wobei sich der Schaufelblattabschnitt (202) in Längsrichtung über eine Länge erstreckt und ein erstes Ende (2021) und ein zweites Ende (2022) aufweist, wobei der Schaufelblattabschnitt (202) seitlich durch eine Schaufelblattfläche definiert ist, wobei der Schaufelblattabschnitt (202) einen inneren Hohlraum (205) aufweist, der sich vollständig entlang der Länge erstreckt, wobei der innere Hohlraum (205) seitlich durch eine Innenfläche definiert ist und wobei die Innenfläche durch Drahterodieren erhalten wird und der innere Hohlraum (205) seitlich durch eine Regelfläche definiert ist;
wobei eine Hülse (5032, 5042) von mindestens einem von einem Basisabschnitt (503) und einem Mantelabschnitt (504) in den inneren Hohlraum (205) des Schaufelblattabschnitts (202) eingesetzt ist, wobei eine Außenfläche der oder jeder Hülse (5032, 5042) mit der Regelfläche des inneren Hohlraums (205) des Schaufelblattabschnitts (202) zusammenpasst, **dadurch gekennzeichnet, dass**
das Verfahren ferner Verbinden des Schaufelblattabschnitts mit dem mindestens einen des Basisabschnitts und/oder des Mantelabschnitts durch Schweißen oder Kleben oder Hartlöten umfasst.

2. Verfahren zur Herstellung nach dem vorstehenden Anspruch, wobei der Schaufelblattabschnitt (202) an einer ersten Seite benachbart zu einem Basisabschnitt (503) und an einer zweiten Seite benachbart zu einem Mantelabschnitt (504) angeordnet ist und Drahterodieren zur Erzeugung eines Durchgangslochs in sowohl dem Basisabschnitt (503) als auch dem Mantelabschnitt (504), jeweils an den Enden des inneren Hohlraums (205), verwendet wird.

3. Schaufel für eine Turbomaschine, hergestellt durch das Verfahren nach einem der vorstehenden Ansprüche.

4. Schaufel (201) nach Anspruch 3, umfassend einen Schaufelblattabschnitt (202), wobei sich der Schaufelblattabschnitt in Längsrichtung über eine Länge erstreckt und ein erstes Ende (2021) und ein zweites Ende (2022) aufweist, wobei der Schaufelblattabschnitt seitlich durch eine Schaufelblattfläche definiert ist, wobei der Schaufelblattabschnitt einen inneren Hohlraum (205) aufweist, der sich vollständig entlang der Länge erstreckt, und wobei der innere Hohlraum seitlich durch eine Regelfläche definiert ist.

5. Schaufel (401) nach Anspruch 4, die als eine Leitschaufel für eine Dampfturbine angeordnet ist und einen Basisabschnitt (403), einen Mantelabschnitt (404) und einen Schaufelblattabschnitt (402) umfasst, wobei sich der Schaufelblattabschnitt in Längsrichtung über eine Länge erstreckt und ein erstes Ende (4021) und ein zweites Ende (4022) aufweist, wobei das erste Ende benachbart zu dem Basisabschnitt (403) ist und das zweite Ende (404) benachbart zu dem Mantelabschnitt ist, wobei der Schaufelblattabschnitt seitlich durch eine Schaufelblattfläche definiert ist, wobei der Schaufelblattabschnitt einen inneren Hohlraum (405) aufweist, der sich vollständig entlang der Länge erstreckt, und wobei der innere Hohlraum seitlich durch eine Regelfläche definiert ist.

6. Schaufel (201, 401) nach Anspruch 4 oder Anspruch 5, wobei der Abstand zwischen der Schaufelblattfläche und der Regelfläche an jedem Punkt des Schaufelblattabschnitts (202, 402) entlang der Länge des Schaufelblattabschnitts (202) variabel ist.

7. Schaufel (201, 401) nach einem der Ansprüche 3 bis 6, wobei an dem ersten Ende (2021, 4021) ein erster Versatz zwischen der Schaufelblattfläche und der Regelfläche besteht und an dem zweiten Ende (2022, 4022) ein zweiter Versatz zwischen der Schaufelblattfläche und der Regelfläche besteht, wobei der erste Versatz und/oder der zweite Versatz konstant sind/ist.

8. Schaufel (401) nach Anspruch 5 oder einem davon abhängigen Anspruch, wobei der Basisabschnitt (403), der Mantelabschnitt (404) und der Schaufelblattabschnitt (402) einstückig ausgebildet sind und wobei sich die Regelfläche auch durch den Basisabschnitt und den Mantelabschnitt erstreckt.

9. Schaufel (401) nach Anspruch 5 oder einem davon abhängigen Anspruch, wobei der Basisabschnitt (403) und der Mantelabschnitt (404) an den ersten und zweiten Enden (4021, 4022) mit dem Schaufelblattabschnitt (402) verbunden sind, wobei der Basisabschnitt an dem ersten Ende ein erstes Loch mit einer Form entsprechend der Form der Regelfläche aufweist, wobei der Mantelabschnitt an dem zweiten Ende ein zweites Loch mit einer Form entsprechend der Form der Regelfläche aufweist.

10. Schaufel (401) nach Anspruch 5 oder einem davon abhängigen Anspruch, wobei der Basisabschnitt (503) eine erste Hülse (5032) mit einer Außenfläche umfasst, die mit der Regelfläche des Schaufelblattabschnitts (502) zusammenpasst, und/oder wobei der Mantelabschnitt (504) eine zweite Hülse (5042) mit einer Außenfläche aufweist, die mit der Regelfläche des Schaufelblattabschnitts (502) an dem zweiten Ende zusammenpasst.

11. Schaufel nach Anspruch 10, wobei eine oder jede der ersten Hülse (5032) und der zweiten Hülse (5042) ein zweites Durchgangsloch aufweist, das seitlich durch eine Regelfläche definiert ist.

12. Schaufel nach einem der Ansprüche 3 bis 11, umfassend einen einzigen Basisabschnitt (603), einen einzigen Mantelabschnitt (604) und eine Vielzahl von Schaufelblattabschnitten (602), wobei sich jeder der Schaufelblattabschnitte (602) in Längsrichtung über eine Länge erstreckt und ein erstes Ende und ein zweites Ende aufweist, wobei jedes der ersten Enden benachbart zu dem Basisabschnitt (603) ist und jedes der zweiten Enden benachbart zu dem Mantelabschnitt (604) ist, wobei jeder der Schaufelblattabschnitte (602) seitlich durch eine Schaufelblattfläche definiert ist, wobei jeder der Schaufelblattabschnitte (603) den inneren Hohlraum aufweist, der sich vollständig entlang der Länge erstreckt, und wobei der innere Hohlraum seitlich durch die Regelfläche definiert ist.

13. Turbomaschine, umfassend eine Vielzahl von Schaufeln nach einem der Ansprüche 3 bis 12.

## Revendications

1. Procédé de fabrication d'une aube (201) d'une turbomachine comprenant une partie de profil aérodynamique (202), dans lequel ladite partie de profil aérodynamique (202) s'étend longitudinalement sur une longueur et possède une première extrémité (2021) et une seconde extrémité (2022), dans lequel ladite partie de profil aérodynamique (202) est définie latéralement par une surface de profil aérodynamique, dans lequel une partie de profil aérodynamique (202) possède une cavité interne (205) s'étendant entièrement le long de ladite longueur, dans lequel ladite cavité interne (205) est définie latéralement par une surface interne, et dans lequel ladite surface interne est obtenue par usinage par étincelage et ladite cavité interne (205) est définie latéralement par une surface réglée ;
dans lequel un manchon (5032, 5042) d'au moins l'une d'une partie de pied (503) et d'une partie d'enveloppe (504) est inséré dans la cavité interne (205) de la partie de profil aérodynamique (202), une surface externe du ou de chaque manchon (5032, 5042) possédant une surface externe s'accouplant avec la surface réglée de la cavité interne (205) de la partie de profil aérodynamique (202), **caractérisé en ce que**
le procédé comprend en outre l'assemblage de la partie de profil aérodynamique conjointement avec au moins l'une de la partie de pied et de la partie d'enveloppe par soudage ou collage ou brasage.

2. Procédé de fabrication selon la revendication précédente, dans lequel ladite partie de profil aérodynamique (202) est adjacente sur un premier côté à une partie de pied (503) et sur un second côté à une partie d'enveloppe (504), et un usinage par étincelage est utilisé pour créer un trou traversant à la fois dans ladite partie de pied (503) et ladite partie d'enveloppe (504) respectivement au niveau des extrémités de ladite cavité interne (205).

3. Aube pour une turbomachine fabriquée par le procédé selon l'une quelconque des revendications précédentes.

4. Aube (201) selon la revendication 3, comprenant une partie de profil aérodynamique (202), dans laquelle ladite partie de profil aérodynamique s'étend longitudinalement sur une longueur et possède une première extrémité (2021) et une seconde extrémité (2022), dans laquelle ladite partie de profil aérodynamique est définie latéralement par une surface de profil aérodynamique, dans laquelle ladite partie de profil aérodynamique possède une cavité interne (205) s'étendant entièrement le long de ladite longueur, et dans laquelle ladite cavité interne est définie latéralement par une surface réglée.

5. Aube (401) selon la revendication 4, étant agencée en tant qu'aube de stator pour une turbine à vapeur et comprenant une partie de pied (403), une partie d'enveloppe (404) et une partie de profil aérodynamique (402), dans laquelle ladite partie de profil aérodynamique s'étend longitudinalement sur une longueur et possède une première extrémité (4021) et une seconde extrémité (4022), ladite première extrémité étant adjacente à ladite partie de pied (403) et ladite seconde extrémité (404) étant adjacente à ladite partie d'enveloppe, dans laquelle ladite partie de profil aérodynamique est définie latéralement par une surface de profil aérodynamique, dans laquelle ladite partie de profil aérodynamique possède une cavité interne (405) s'étendant entièrement le long de ladite longueur, et dans laquelle ladite cavité interne est définie latéralement par une surface réglée.

6. Aube (201, 401) selon la revendication 4 ou la revendication 5, dans laquelle en tout point de la partie de profil aérodynamique (202, 402), la distance entre ladite surface de profil aérodynamique et ladite surface réglée est variable le long de la longueur de la partie de profil aérodynamique (202).

7. Aube (201, 401) selon l'une quelconque des revendications 3 à 6, dans laquelle au niveau de ladite première extrémité (2021, 4021) il existe un premier décalage entre ladite surface de profil aérodynamique et ladite surface réglée et au niveau de ladite seconde extrémité (2022, 4022) il existe un second décalage entre ladite surface de profil aérodynamique et ladite surface réglée, ledit premier décalage et/ou ledit second décalage étant constants.

8. Aube (401) selon la revendication 5 ou une quelconque revendication dépendante de celle-ci, dans laquelle ladite partie de pied (403), ladite partie d'enveloppe (404) et ladite partie de profil aérodynamique (402) sont d'une seule pièce, et dans laquelle ladite surface réglée s'étend également à travers ladite partie de pied et ladite partie d'enveloppe.

9. Aube (401) selon la revendication 5 ou une quelconque revendication dépendante de celle-ci, dans laquelle ladite partie de pied (403) et ladite partie d'enveloppe (404) sont reliées à ladite partie de profil aérodynamique (402) au niveau desdites première et seconde extrémités (4021, 4022), dans laquelle ladite partie de pied possède un premier trou ayant une forme correspondant à la forme de ladite surface réglée au niveau de ladite première extrémité, dans laquelle ladite partie d'enveloppe possède un second trou ayant une forme correspondant à la forme de ladite surface réglée au niveau de ladite seconde extrémité.

10. Aube (401) selon la revendication 5 ou une quelconque revendication dépendante de celle-ci, dans laquelle ladite partie de pied (503) comprend un premier manchon (5032) possédant une surface externe s'accouplant avec ladite surface réglée de ladite partie de profil aérodynamique (502) au niveau de ladite première extrémité et/ou dans laquelle ladite partie d'enveloppe (504) possède un second manchon (5042) possédant une surface externe s'accouplant avec ladite surface réglée de ladite partie de profil aérodynamique (502) au niveau de ladite seconde extrémité.

11. Aube selon la revendication 10, dans laquelle un ou chacun dudit premier manchon (5032) et dudit second manchon (5042) possède un second trou traversant défini latéralement par une surface réglée.

12. Aube selon l'une quelconque des revendications 3 à 11, comprenant une partie de pied unique (603), une partie d'enveloppe unique (604) et une pluralité de parties de profil aérodynamique (602), dans laquelle chacune desdites parties de profil aérodynamique (602) s'étend longitudinalement sur une longueur et possède une première extrémité et une deuxième extrémité, chacune desdites premières extrémités étant adjacente à ladite partie de pied (603) et chacune desdites secondes extrémités étant adjacente à ladite partie d'enveloppe (604), dans laquelle chacune desdites parties de profil aérodynamique (602) est définie latéralement par une surface de profil aérodynamique, dans laquelle chacune desdites parties de profil aérodynamique (603) possède la cavité interne s'étendant entièrement le long de ladite longueur, et dans laquelle ladite cavité interne est définie latéralement par la surface réglée.

13. Turbomachine comprenant une pluralité d'aubes selon l'une quelconque des revendications 3 à 12.
